Europäisches Patentamt

European Patent Office

Office européen des brevets

(19)

(11) EP 1 734 546 A2

(12) **EUROPEAN PATENT APPLICATION**

(43) Date of publication:
**20.12.2006 Bulletin 2006/51**

(51) Int Cl.:
***H01G 9/045*** (2006.01)

(21) Application number: **06252838.5**

(22) Date of filing: **01.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.06.2005 JP 2005173774**
**29.08.2005 JP 2005247094**
**21.10.2005 JP 2005307334**
**01.12.2005 JP 2005347885**

(71) Applicant: **Mitsubishi Aluminum Kabushiki Kaisha Tokyo 105-0014 (JP)**

(72) Inventors:
• **Akira, Yoshii,**
**Mitsubishi Aluminum K.K.**
**Susono-shi**
**Shizuoka 410-1127 (JP)**
• **Hideo, Watanabe,**
**Mitsubishi Aluminum K.K.**
**Susono-shi**
**Shizuoka 410-1127 (JP)**

(74) Representative: **Rees, Alexander Ellison et al**
**Urquhart-Dykes & Lord LLP**
**30 Welbeck Street**
**London W1G 8ER (GB)**

(54) **Aluminum foil for the electrolytic capacitor and etching method for forming etching pits**

(57) In manufacturing an aluminum foil for the electrolytic capacitor, the present invention permits the productivity to be enhanced by omitting the intermediate annealing step. The etching pits can be formed excellently in the aluminum foil through the non-electrolytic process.

The aluminum foil that may be used has the composition that is composed of 5 to 40 ppm of Si, 5 to 40 ppm of Fe, 0.1 to 3 ppm of Pb and 15 to 150 ppm of Ni, and for the rest, Al and inevitable impurities, in which the inevitable impurities include less than 10 ppm of Cu and the total quantity of the inevitable impurities except Cu is equal to or less than 100 ppm. In the aluminum foil having the above composition, the oxide film has the thickness of 20 to 60 Å and Ni has the ionic strength ratio that is equal to or more than 1.5 at the depth of 0.5 $\mu$m, equal to or more than 10 at the depth of 0.1$\mu$m and equal to or more than 2 at the depth of 0.3 $\mu$m, where it is assumed that the Ni ionic strength is equal to 1 at the depth of 1 $\mu$m. Otherwise, Ni has the concentration ratio that is equal to 5 to 50 when it is located deep in the central area of the oxide film, and 80 to 150 when it is located at the interface between the oxide film and the aluminum foil blank, where the 10 nm depth in which Ni is located 10 nm toward the blank from the interface between the oxide film and the aluminum foil blank is assumed to be 1. The etching pit formation may be performed by following the step of removing the surface layer on the aluminum alloy foil including the oxide film by the thickness of 20 to 200 Å by having it contacted by a solution that contains no hydrochloric acid or solution that contains less than 1000 ppm of chloride ions, without conducting electric current, the step of forming etching pits and the step of enlarging the diameters of thus formed etching pits.

F I G. 1

**Description**

BACKGROUND OF THE INVENTION

Field of the Invention

The present invention relates to an aluminum foil that may be used for the electrode of the electrolytic capacitor and an etching method for forming etching pits by subjecting the aluminum foil for the electrolytic capacitor to the non-electrolytic etching process.

Prior Art

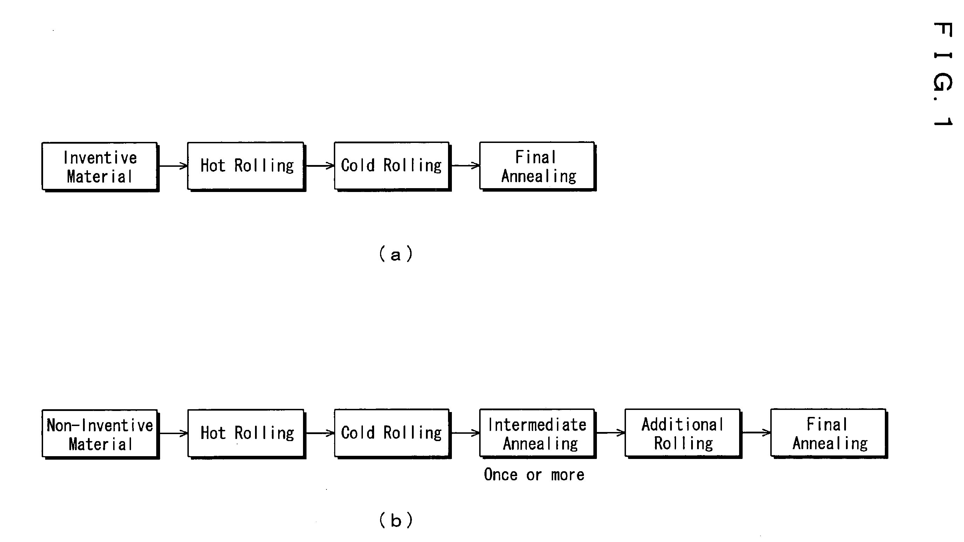

In manufacturing aluminum foils that may be used for the electrode of the electrolytic capacitor, a conventional aluminum foil blank has the purity of 99.9 % or more, and contains 5 to 20 ppm of Si, 5 to 20 ppm of Fe, 10 to 80 ppm of Cu, 0.1 to 3 ppm of Pb, and for the rest, 1 to 100 ppm of slight impurities. When this aluminum foil blank is used to produce an aluminum foil having 70 to 130 $\mu$m thickness, it may be seen from Fig. 1(b) that it is passed through the hot rolling, cold rolling, intermediate annealing and additional rolling processes, and is then passed through the final annealing process that occurs at 500°C or above for 3 hours or longer so that the cubic crystal rate of 95 % or more can be provided. The aluminum foil thus obtained is then passed through the roughening process using the electrolytic etching in order to increase its surface area, and is then passed through the forming process. The electrolytic capacitor electrode may thus be obtained. The holes that are formed by the electrolytic etching corrosion (hereinafter referred to as "pits") may grow vertically with regard to the cubic orientation. In order to form such pits uniformly so that the surface area can be increased, therefore, the aluminum foil must have the high cubic orientation occupancy rate. For this reason, the processes described above must be complicated in order to meet the above requirements (as disclosed in Japanese patent application S54 (1979) - 11242, for example).

Another method is proposed to provide the high cubic crystal rate by controlling the hot working rate and cold working rate, although the annealing operation during the cold rolling process (hereinafter referred to as "intermediate annealing") may be omitted.

For the foil thickness of 150 $\mu$m or more, the inventors of the present application know that the high cubic crystal rate can be provided by carrying out the final annealing process at 500°C or above.

From the standpoint of the aluminum material, it is known that an aluminum material having the high purity of 99.9 % or more may be used as a foil that provides the high cubic crystal rate. It is also known that this aluminum material consists mainly of Fe, Si, Cu and Pb, in which it is possible to control the quantities of those components to be added. The recrystallizing behavior of aluminum may be controlled by Fe, Si and Cu. Those components are the elements that are required to provide the high cubic crystal rate after the final annealing process is completed. Particularly, Cu is required to increase the recrystallizing temperature. Equal to 15 ppm or less, Cu may cause the recrystallizing grains to grow during the rolling process, causing the non-cubic crystal grains to become gross. Thus, the high cubic crystal rate cannot be obtained. Equal to 100 ppm or more, on the other hand, Cu may prevent the crystal grains from growing. Thus, the high cubic crystal rate cannot be obtained. The practical range should be between 20 and 70 ppm, therefore.

Still another method is provided to simplify the intermediate processes from the standpoint of the aluminum materials. To this end, Cu and Ni may be added as appropriate (as disclosed in Japanese patent application S63 (1988) - 255911, for example).

The aluminum foil is then passed through the electrolytic etching process in which it is immersed in the strong acid solution for forming holes by the electrolytic etching corrosion (hereinafter referred to as "pits"), and the diameters of the pits thus formed may be enlarged by allowing them to be dissolved electrolytically or chemically while they are immersed in the strong acid solution, depending upon the voltages to be applied during the following forming process.

Usually, the operation may occur in two stages as described above, that is, the first stage of forming etching pits and the second step of enlarging the diameters of the thus formed pits depending upon the particular requirements such as the usage. In the first step, the electrolytic process may be used, and in the second step, the electrolytic or chemical dissolving process may be used.

The high purity aluminum foil may be characterized by its poor chemical dissolvability since it may progress into the passive state when it is immersed in the strong acid solution. For this reason, it is thought that the electrolytic etching is indispensable. In order to form the number of pits as desired during the electrolytic etching process, the quantity of electricity of 40 to 60 C/cm$^2$ is required. The electric power consumption will thus become considerably large to achieve it.

The electric power consumption can be reduced effectively by increasing the etching ability of the aluminum foil. In Japanese patent application H4 (1992) - 213810, for example, it is proposed that the different components of the aluminum foil should be located on the oxide film surface or on the interface between the oxide film and aluminum foil blank. It is also described that it is important that the components located on the foil surface should be located on the electrode surface layer because they act as the origins for the etching pits being formed.

In Japanese patent application 2003 - 318069, it is proposed that pits may be formed using the non-electrolytic process, by adding some metal compounds during the pit forming process.

SUMMARY OF THE INVENTION

It may be appreciated from the foregoing description, however, that the method whereby the aluminum foil having the high cubic crystal rate for the electrolytic capacitor can be manufactured through the complicated processes or the method whereby the working rate can be controlled is not effective, leading to the increased manufacturing costs. It may also be appreciated from the foregoing description that, for some relatively thick aluminum foils, either of the methods may permit the intermediate annealing process to be omitted by increasing the heating temperature during the final annealing process, whereas either of the methods cannot be applied for the less thick aluminum foils because the thickness of the foils that can be processed is restricted.

Cu, which is contained in the final electrolytic capacitor product, might cause the electrical sparks when it is dissolved in the electrolytic solution and is then deposited again. In order to avoid such electrical sparks caused by Cu, Cu may be removed from the etching foil surface by immersing it in the strong nitrate solution at the end of the etching process.

During the etching process for the aluminum foil for the electrolytic capacitor, some the aluminum foil surface may usually be removed as the etching reaction progresses. Specifically, the surface layer may be removed by 0.1 to 0.5 $\mu$m. As it is described in Japanese patent application H4 (1992) — 213810, therefore, the chemical components located on the surface layer of the electrodes may contribute to the chemical reaction at the initial stage, but cannot contribute to the whole etching reaction.

When the purity of the aluminum foil is reduced to about 99 %, some impurity components contained in the aluminum foil may promote the chemical dissolvability. However, reducing the aluminum purity will cause the crystal orientation to lose its uniformity, disabling the etching pits to glow unidirectionally. Thus, the dissolving can only occur on the surface, and the normal etching pits cannot be obtained. The aluminum purity of 99.9 % or more is required to maintain the cubic crystal rate to be 95 % or more, and it is thus difficult to control the chemical dissolvability by the aluminum purity.

Normally, the electrolytic etching is carried out by conducting electric current of 3000 to 4000 A. This may cause the foil to produce some heat. For this reason, it is difficult to conduct electric current above the certain value. As the electrolytic area is restricted by the carbon electrode opposite the aluminum foil electrode, it is impossible to enhance the manufacturing capability any further. The heat produced by the aluminum foil may cause the quantity of conducting electric current to vary in the direction of the width, which may cause variations in the capacitance of the aluminum foil.

In general, electrical power is supplied by using the copper pipe roller, which may cause electrical sparks in the power supply. If such electrical sparks should occur, the aluminum foil may be broken, or defects may be caused on the pit holes. This causes the problem of the quality. In addition, some cooling facilities would be required to solve the heating problem, leading to the increased manufacturing facility costs. It may be appreciated from the above description that it is difficult to reduce the costs of the etching foils, where the pit forming process involves the electrolytic process.

Although it is described in Japanese patent application H4 (1992) - 213810 that the chemical dissolvability can be enhanced, it is pointed out that as the chemical components located on the aluminum foil surface can only act as the origins for the etching pits being formed, it is important to locate them on the electrode surface layers. Specifically, it is proposed that the ratio of ionic strength of the interface between the oxide film and aluminum to the ionic strength of the interior of the foil blank except the foil surface layer of up to 0.1$\mu$m thickness should be equal to 1.2 to 30 and that the different chemical components such as P, V, Ti, Cr, Ni, Ta, Zr, C and Be should be equal to 1 to 40 ppm in the interior of the foil except the foil surface layer up to 0.1$\mu$m thickness. The electrolytic etching can be carried out within the above range without causing any problem, as far as it occurs at the level in which those chemical components act as the origins for the etching pits being formed. If the chemical etching occurs as a principal process, however, the chemical reaction is so low for the above concentration degrees that it is impractical to conduct the chemical etching.

In view of the above considerations, Japanese patent application 2003 - 318069 proposes the method using the non-electrolytic process. In this method, a special reagent must be used, which would complicate its management. Thus, it is not practical.

Under the situation described so far, one object of the present invention is to provide an aluminum material for the electrolytic capacitor electrodes, wherein the high cubic crystal rate can be obtained over the broad range of thickness of the aluminum hoil without passing it through the intermediate annealing process. As the aluminum material contains no Cu component, the etching process can be simplified.

Another object of the present invention is to provide an aluminum material for the electrolytic capacitor electrodes, wherein the chemical reaction of the high purity aluminum foil can be enhanced, and etching pits can be formed without using the electricity. Thus, the etching costs can be reduced and the productivity can be increased. Using this aluminum foil, the etching pits can be formed non-electrolytically in the simple manner, without having to make major modifications to the current manufacturing conditions. As a result, the manufacturing capability can be increased, and the low-cost manufacturing facilities can be realized. Thus, the high quality etching foils can be manufactured at the reduced costs.

A further object of the present invention is to provide an etching method for forming pits, wherein the method permits the use of high purity aluminum foils that may increase the chemical dissolvability, and permits etching pits to be formed excellently without having to go through the electrolytic process.

The inventors of the present application have noticed Cu as one of the principal chemical components or elements, and have discovered another chemical component that can replace Cu. It has been found that the intermediate annealing process may be omitted by adding Ni in place of Cu, and the high cubic crystal rate can be obtained without controlling the working rate of the hot rolling and so on, as opposed to the prior art.

In general, Cube grains forming the nucleus of the cubic crystal already exist at the end of the hot rolling process, and thus the high cubic crystal rate may be provided by recrystallizing some parts of the Cube grains during the intermediate annealing process, giving stress to the grains other than the Cube grains during the additional rolling process, and allowing the Cube grains to grow predominantly during the final annealing process. It should be noted, however, that the foil that contains chemical components such as Ni allows Cube grains to grow sufficiently without being placed under the above manufacturing conditions, and the high cubic crystal rate can be obtained by passing the rolled material through the final annealing process. Ni provides the possibility for the non-electrolytic etching by enhancing the chemical dissolvability of the aluminum foil.

Specifically, the aluminum foil for the electrolytic capacitor according to one embodiment of the present invention contains 5 to 40 ppm of Si, 5 to 40 ppm of Fe, 0.1 to 3 ppm of Pb and 15 to 150 ppm of Ni as expressed in terms of the mass ratio, and, for the rest, Al and inevitable impurities, in which the inevitable impurities include less than 10 ppm of Cu, and the total quantity of the inevitable impurities other than Cu is equal to or less than 100 ppm.

The aluminum foil for the electrolytic capacitor according to another embodiment of the present invention contains 5 to 40 ppm of Si, 5 to 40 ppm of Fe, 0.1 to 3 ppm of Pb and 15 to 150 ppm of Ni as expressed in terms of the mass ratio, and, for the rest, Al and inevitable impurities, in which the inevitable impurities include less than 10 ppm of Cu, and the total quantity of the inevitable impurities other than Cu is equal to or less than 100 ppm, and wherein the composition includes the Al purity of 99.9 % or more.

The etching method for forming pits according to the present invention may be applied to the aluminum foil having the composition described above.

In the following description, the action of each of the chemical components according to the present invention is shown, and the reason for which such particular chemical components have been chosen is explained. The content of each chemical component that is shown below is expressed in terms of the mass ratio.

Si: 5 to 40 ppm, Fe: 5 to 40 ppm

Si and Fe combine with Al to provide an appropriate quantity of deposits, and may prevent the recrystallized grains from becoming gross, allowing Cube grains to grow predominantly. It should be noted, however, that the refining costs would be high for less than 5 ppm of each component, which would make industrial applications impractical. For more than 40 ppm of each component, on the other hand, the total quantity of deposits would become too much, restricting the predominant growth of Cube grains. Thus, the high cubic crystal rate cannot be obtained. For this reason, the content of Si and Fe should have the above range, respectively. The preferred lower limit should be 10 ppm for Si and Fe, and the preferred upper limit should be 20 ppm for Si and Fe.

Pb: 0.1 to 3 ppm

Pb is a chemical component that permits the surface to be dissolved uniformly during the etching process. Below 0.1 ppm, its effect cannot be expected, and above 3 ppm, it provides the high dissolvability, causing the excessive dissolution. Therefore, the content of Pb should have the above range. The preferred lower limit is 0.2 ppm, and the preferred upper limit is 1 ppm.

Ni: 15 to 150 ppm

Ni is a chemical component that promotes the predominant growth of Cube grains, and may provide the high cubic crystal rate for the wide range of aluminum foil thickness, through only the final annealing process without the intermediate annealing process being involved.

Furthermore, Ni causes the surface concentration to occur, and may become noble by existing near the foil surface as the chemical compound. Thus, the potential difference with regard to the interior of the bulk aluminum becomes large, causing the local cell reaction that increases the dissolvability around that area and permitting pits to be formed without the electrolytic process being involved. The reaction becomes higher as the potential difference with regard to the interior becomes larger. It should be noted that the uniform etching reaction can be enhanced by letting Ni enter the oxide film region that causes the oxide film to be weakened appropriately.

In order to permit Ni to provide each of the above actions, 15ppm or more of Ni is required. Below 15 ppm, it may cause Cube grains to grow insufficiently, and it will become difficult to obtain the desired cubic crystal rate if the intermediate anneal process is not involved. Furthermore, the chemical dissolvability thus obtained is insufficient, and the non-electrolytic etching would become difficult. Above 150 ppm of Ni, on the other hand, the excessive Ni surface concentration would be caused after the final annealing process, and it would be dissolved excessively during the etching process. Although the cubic crystal rate of 95 % or more may be provided, it would lead to the excessive pit formation, and those pits would be bonded, causing the pit forming efficiency to be lowered. Therefore, the content of Ni should have the above range. The preferred lower limit is 21 ppm, and the more preferred lower limit is 50 ppm. The preferred upper limit is 100 ppm.

Cu: less than 10 ppm

Cu is a chemical component that controls the recrystallization of Al, but controls the predominant growth of Cube grains. Thus, if excessive Cu is contained, 200 ppm or more of Ni must be added. In this case, the excessive dissolving occurs as described above. If Ni is added within the range that causes no excessive dissolving, it is difficult to obtain the cubic crystal rate of 95 %, and the intermediate annealing and additional rolling must occur adequately in order to ensure that Cube grains can grow predominantly. Because of this, it is impossible to simplify the manufacturing process, as intended by the present invention.

Although Cu may increase the dissolvability of aluminum, it does not exhibit the strong surface concentration. Thus, the etching capability for the surface layer cannot be increased. As opposed, it may enhance the internal dissolvability that may cause the excessive dissolving to occur during the pit hole diameter enlarging process, causing the capacitance to be reduced. For the reasons described above, preferably, Cu should not be contained as far as it can be, but any impurities other than inevitable Cu contained in the ground metal are not to be added, so Cu should be less than 10 ppm. Preferably, it should be 5ppm or less.

Other impurities: (total quantity except Cu being equal to or less than 100 ppm)

If the impurities other than Cu that are contained are more than 100 ppm, the impurities and aluminum deposits may be increased. Thus, the high cubic crystal rate could not be provided by simply adding Ni. If more inevitable impurities are contained, pits would be formed excessively. This would cause the pits to be bonded, causing the reduction in the capacitance that would cause the dissolving to progress more quickly than needed. For this reason, it is preferred that the total quantity of impurities except Cu should be 100 ppm or less, and more preferably, 50 ppm or less.

Aluminum purity: 99.9 % or more

If the aluminum purity is less than 99.9 %, it would not ensure the uniformity in the crystal orientation. Thus, the normal etching pits cannot be formed. To maintain the cubic crystal rate to be 95 % or above by ensuring the uniformity in the crystal orientation, the aluminum must have the purity of 99.9 % or more.

The high cubic crystal rate as referred to in the specification should be understood to mean the cubic crystal rate of 95 % or more within the scope of the present invention, since the cubic crystal rate being 95 % or more represents the level that meets the requirements demanded in the current technological situation.

The etching pit formation is principally based on the chemical dissolving process as it is intended by the aluminum foil for the electrolytic capacitor electrodes in accordance with one embodiment of the present invention. In this embodiment, it is required that the chemical reaction should be brought about quickly at the interface between the oxide film and aluminum foil blank. This will occur the more effectively as the potential difference between the interior of the foil and the interface between the oxide film and foil is the larger. It is thus important that the concentration slope exists in the extremely narrow region.

As part of the foil surface may be removed while the etching is going on, the chemical reaction must be brought about continually following the etching reaction, and some components that cause the chemical reaction must be located deep into the foil.

Specifically, the aluminum foil for the electrolytic capacitor in accordance with one embodiment of the present invention is to be subject to the etching process, and has the composition that is composed of 5 to 40 ppm of Si, 5 to 40 ppm of Fe, 0.1 to 3 ppm of Pb and 15 to 150 ppm of Ni as expressed in terms of the mass ratio, and, for the rest, Al and inevitable impurities, wherein the inevitable impurities include less than 10 ppm of Cu and the total quantity of the inevitable impurities except Cu is equal to or less than 100 ppm and includes 99.9 % or more of Al for the rest, and wherein Ni has the concentration ratio of 5 to 50 in the depth and center of the oxide film and 80 to 150 at the interface between the oxide film and aluminum foil blank, where the 10 nm depth in which Ni is located toward the foil blank from the interface between the oxide film and aluminum foil blank is assumed to be 1.

The following describes how the concentration ratio should be specified.

Ni concentration ratio: 5 to 50 in the center of the oxide film and 80 to 150 at the interface, where the 10 nm depth toward the blank from the interface between the oxide film and aluminum foil blank is assumed to be 1

When the above concentration ratio requirements are met, it means that Ni is concentrated at the surface layer and the pit formation may be promoted effectively. The pits thus formed may then grow effectively in the direction of the depth of the aluminum foil blank, enhancing the roughening rate. It should be noted that if the Ni concentration at the interface is less than 80 in terms of the relative ratio, it may cause the growing speed to be slower, and sufficient pits cannot be provided. Above 150, on the other hand, the reaction would occur excessively, and some pits may be lost. If the Ni concentration at the center of the oxide film is less than 5 in terms of the relative ratio, the oxide film would resist the reaction so strongly that the reaction would not occur sufficiently. Above 50, on the other hand, it would cause the whole dissolution. That is the reason why the above concentration ratio is specified. This concentration ratio may also be expressed in terms of the ionic strength ratio, for example.

The concentration for the chemical components may also be measured by using the transmission electron microscope. Then, the component concentration may be obtained as the average value within the analytical spot diameter of the transmission electron microscope. Normally, the analytical spot diameter in the electron microscope represents 2 to 10 nm. It should be noted, however, that the present invention should not be restricted by this analytical diameter value.

It is necessary that the aluminum foil should have had the oxide film of the adequate thickness deposited on the surface thereof, prior to the etching process that will occur against the aluminum foil. If the oxide film thus deposited has the thickness of less than 20 Å, the surface would be dissolved excessively, reducing the roughening rate. Above 60 Å, the surface would be dissolved locally so that the roughening rate may also be reduced. For this reason, the thickness should preferably have the range of between 20 and 60 Å. The oxide film thickness may be measured by means of the X-ray photoelectron analysis (ESCA). It should be noted that the present invention should not be restricted by any particular configuration of the measuring apparatus and any particular measuring procedure. Any usual method may be employed.

The etching pit formation is principally based on the chemical dissolving process as it is intended by the aluminum foil for the electrolytic capacitor electrodes in accordance with anther embodiment of the present invention. In this embodiment, it is required that the chemical reaction occurring at the aluminum foil surface should go on continually. Thus, the component concentration ratio should be continued until it reaches the interior of the foil, specifically, down to the depth of at least 0.5 $\mu$m. The aluminum foil for the electrolytic capacitor in accordance with the second embodiment of the invention is based on the discovery that if the heat treatment occurs for the aluminum foil that contains the quantity of Ni component that would not reduce the aluminum purity, Ni can be concentrated on the aluminum foil surface.

Specifically, the aluminum foil for the electrolytic capacitor in accordance with the second embodiment of the present invention is to be subject to the etching process, and has the composition that is composed of 5 to 40 ppm of Si, 5 to 40 ppm of Fe, 0.1 to 3 ppm of Pb and 15 to 150 ppm of Ni as expressed in terms of the mass ratio, and, for the rest, Al and inevitable impurities, wherein the inevitable impurities include less than 10 ppm of Cu and the total quantity of the inevitable impurities except Cu is equal to or less than 100 ppm and includes 99.9 % or more of Al for the rest, and wherein the oxide film has the thickness of 20 to 60 Å and Ni has the concentration ratio in which the ionic strength ratio is equal to or more than 10 when it is located 0.1 $\mu$m deep, equal to or more than 2 when it is located 0.3 $\mu$m and equal to or more than 1.5 when it is located 0.5 $\mu$m, where it is assumed that the ionic strength of Ni is equal to 1 when Ni is located 1 $\mu$m deep in the aluminum foil.

In this embodiment, the reason for which the oxide film is specified as having the thickness of 20 to 60 Å is the same as for the preceding embodiment, and the reason for which the concentration ratio should be specified as above are now explained below.

Ionic strength ratio:

0.1 $\mu$m depth: equal to or more than 10; 0.3 $\mu$m depth: equal to or more than 2; 0.5$\mu$m depth: equal to or more than 1.5

Preferably, Ni should have been concentrated at the surface layer, and should have the concentration ratio as specified above. The pit formation may be promoted effectively by allowing Ni to have the high concentration ratio nearer to the surface side. The roughening rate may be increased by allowing the pits to grow effectively in the direction of the depth.

The etching method for forming pits in accordance with one embodiment of the present invention is provided, and is now described below, wherein the aluminum foil for the electrolytic capacitor has the composition that is composed of 5 to 40 ppm of Si, 5 to 40 ppm of Fe, 0.1 to 3 ppm of Pb and 15 to 150 ppm of Ni as expressed in terms of the mass ratio, and for the rest, Al and inevitable impurities, the inevitable impurities including less than 10 ppm of Cu and the total quantity of the inevitable impurities except Cu being equal to or less than 100 ppm and including 99.9 % or more of Al, and wherein the etching method includes the step of having the aluminum foil contacted by a solution that contains no hydrochloric acid or solution that contains less than 1000 ppm of chloride ions, the step of removing the surface layer of the aluminum alloy foil surface including the oxide film without conducting electric current, the step of forming the etching pits, and the step of enlarging the diameters of the thus formed etching pit holes.

The etching method for forming pits in accordance with another embodiment of the present invention is provided, and is now described below, wherein the aluminum foil for the electrolytic capacitor has the composition that is composed of 5 to 40 ppm of Si, 5 to 40 ppm of Fe, 0.1 to 3 ppm of Pb and 15 to 150 ppm of Ni as expressed in terms of the mass ratio, and for the rest, Al and inevitable impurities, the inevitable impurities including less than 10 ppm of Cu and the total quantity of the inevitable impurities except Cu being equal to or less than 100 ppm and including 99.9 % or more of Al, and Ni has the concentration ratio of 5 to 50 when it is located in the center of the oxide film and in the depth direction thereof and 80 to 150 when it is located near the interface between the oxide film and aluminum foil blank, where the 10 nm depth in which Ni is located toward the aluminum foil blank from the interface between the oxide film and aluminum foil blank is assumed to be one (1), and wherein the etching method includes the step of having the aluminum foil contacted by a solution that contains no hydrochloric acid or solution that contains less than 1000 ppm of chloride ions, the step of removing the surface layer of the aluminum alloy foil surface including the oxide film without conducting electric current, the step of forming the etching pits, and the step of enlarging the diameters of the thus formed etching pit holes.

The etching method for forming pits in accordance with still another embodiment of the present invention is provided and is now described below, wherein the aluminum foil for the electrolytic capacitor being subject to the etching process has the composition that is composed of 5 to 40 ppm of Si, 5 to 40 ppm of Fe, 0.1 to 3 ppm of Pb and 15 to 150 ppm of Ni as expressed in terms of the mass ratio, and for the rest, Al and inevitable impurities, said inevitable impurities including less than 10 ppm of Cu and the total quantity of said inevitable impurities other than Cu being equal to or less than 100 ppm and including 99.9 % or more of Al for the rest, wherein the oxide film has the thickness of 20 to 60 Å and Ni has the concentration slope in which its ionic strength ratio is equal to or more than 10 when it is located $0.1\mu$m deep, equal to or more than 2 when it is located 0.3 $\mu$m deep and equal to or more than 1.5 when it is located $0.5\mu$m deep, where it is assumed that the ionic strength ratio of Ni is equal to 1 when the aluminum foil is located $1\mu$m deep and wherein the etching method includes the step of having the aluminum foil contacted by a solution that contains no hydrochloric acid or solution that contains less than 1000 ppm of chloride ions, the step of removing the surface layer of the aluminum alloy foil surface including the oxide film without conducting electric current, the step of forming the etching pits, and the step of enlarging the diameters of the thus formed etching pit holes.

In the etching method for forming pits in accordance with any of the embodiments of the present invention, it is specified that the surface layer may be removed by the thickness of 20 to 200 Å.

In the etching method for forming pits in accordance with any of the embodiments of the present invention, it is specified that the pit hole diameter enlarging step may be carried out by having the aluminum alloy foil contacted by the solution that contains no hydrochloric acid or solution that contains less than 1000ppm of chloride ions.

In the etching method for forming pits in accordance with any of the embodiments of the present invention, it is specified that the surface layer removing step and pit hole diameter enlarging step may be carried out by having the aluminum alloy foil contacted by the solution that contains no hydrochloric acid or solution that contains less than 1000ppm of chloride ions.

In the etching method for forming pits in accordance with any of the embodiments of the present invention, it is specified that the pit forming step may be carried out by having the aluminum alloy foil contacted by the solution that contains chloride ions.

Specifically, the etching method for forming pits in accordance with the present invention allows the aluminum alloy foil to be dissolved by immersing it in the solution that contains no hydrochloric acid or solution that contains less than 1000ppm of chloride ions, so that some can be removed from the foil surface layer. Those parts that are removed from the foil surface layer should preferably be 20 to 200 Å.

To allow the etching pits to be formed and grown by the non-electrolytic etching, the aluminum foil according to the present invention contains Ni. The pits can be formed by allowing Ni and bulk aluminum to cause the local cell reaction. To allow the etching pits to be generated from the foil surface layer, it is required that the aluminum foil should contain adequate quantities of the above components, specifically 15 to 150 ppm, and those components should be concentrated on the aluminum foil surface by the thermal treatment. Usually, the foil that has the cubic crystal rate of 95 % or more goes through the annealing process at the high temperature, that is, 500°C or above and the oxide film having the average thickness of 20 to 60 Å may be deposited on the aluminum foil surface. During the thermal treatment, the component that acts as the origin for the local cell reaction may be concentrated on the aluminum foil inside the oxide film. Thus, if the surface is covered heavily with the oxide film during the etching process, it may cause the low reaction to occur or cause the pits to be formed unevenly. To avoid this, some parts of the surface layer including the oxide film may be removed by the surface dissolving and removing method in order to enhance the reaction during the etching process. As the aluminum foil surface may contain irregularities caused by rolling, the surface layer including the oxide film may be removed by an appropriate quantity. As a result, the etching pits that are formed uniformly can be obtained. If the quantity of the surface layer that has been removed at this time is less than 20 Å, the irregularities that occur on the oxide film and aluminum foil surface might greatly affect the uniformity. If the quantity of the surface layer that has been removed is more than 200 Å, this would even cause the concentrated part of the reactive components to be removed, lowering the reacting capability of the pit formation. For this reason, the quantity of the surface layer that will be removed should preferably be 20 to 200 Å when it is expressed in terms of the thickness converted from its weight. More preferably, the lower limit should be 40 Å and the upper limit should be 60 Å.

The removal of the surface layer on the aluminum foil surface may be carried out by using the usual acid solution or alkaline solution. It should be noted, however, that if the solution that contains chloride ions is used or if the electrical current is conducted while this solution is used, this would cause the etching pits to be formed unevenly during the removal process, reducing the uniformity in the surface. Thus, the solution that contains no hydrochloric acid or solution that contains less than 1000 ppm of chloride ions must be used.

The quantity of the surface layer that should be removed may be determined by using the equation (1) given below, based on the reduction in the mass before and after the reagent immersion.

$$\text{One side surface layer thickness Å} = (\triangle W / \alpha) \times 10^7 \times 1/2 \ \dots \ (1)$$

(where, $\triangle W$(reduction): g/cm$^2$; $\alpha$ : aluminum oxide density g/m$^3$)

Following the surface layer removal, the etching pits may be formed by immersing it in the acid solution that may be used for the usual electrolytic etching. During the pit forming process and the subsequent pit hole diameter enlarging process to be described later, a slight electrical current equal to or below 100 mA/cm$^2$ may be conducted without any problem in order to promote the chemical dissolving reaction.

As described above, a slight Ni causes the local cell reaction together with the bulk aluminum, and promotes the formation and growth of etching pits of 10 $\mu$m or more depth, for example. It should be noted, however, that if such Ni content is less than 15 ppm, the etching pits will not be formed and grown sufficiently. Thus, satisfactory etching pits cannot be obtained. If slight Ni content exceeds 150 ppm, on the other hand, it will cause the surface to be dissolved excessively, leading to the surface dissolved state in which the satisfactory etching pits cannot be formed as described above. For the same reasons as described above, the lower limit should preferably be 50 ppm, and the upper limit should preferably be 100 ppm.

Then, the etching pit formation stage is followed by the etching pit hole diameter enlarging stage in which the foil on which the etching pits are formed may preferably be immersed in the solution that contains no hydrochloric acid or the acid solution that contains less than 1000 ppm of chloride ions, and the pits may be enlarged without producing extra pits so that they can be grown into the appropriate pit hole diameters depending upon the voltage used. During the etching pit hole diameter enlarging stage, it is also desirable that the solution that contains no hydrochloric acid or the acid solution that contains less than 1000 ppm of chloride ions are used as described above. If the solution containing hydrochloric acid is used, additional pits would be formed, causing the pits to be distributed unevenly.

During the surface layer removing stage and etching pit hole diameter enlarging stage, the same solution, that is, the solution that contains no hydrochloric acid or solution that contains chloride ions, may also be used. This can save the amount of the solutions being used, and can also relieve the labor and space required to prepare the solutions.

The aluminum foil for the electrolytic capacitor has been described so far in accordance with the embodiments of the present invention. It may be understood from the above description that as the aluminum foil contains 5 to 40 ppm of Si, 5 to 40 ppm of Fe, 0.1 to 3 ppm of Pb and 15 to 150 ppm of Ni as expressed in terms of the mass ratio, and for the rest, Al and inevitable impurities, the inevitable impurities including less than 10 ppm of Cu and the total quantity of the inevitable impurities except Cu being equal to or less than 100 ppm, the high cubic crystal rate can be obtained during the final annealing process, without having to go through the intermediate annealing process, and the productivity can be increased considerably without affecting the quality of the product. Furthermore, the high cubic crystal rate can be achieved for the broad range of aluminum foil thicknesses during the final annealing process alone. Specifically, the high cubic crystal rate can be achieved for the aluminum foil thickness ranging between 70 and 600 $\mu$m in particular.

In the aluminum foil for the electrolytic capacitor in accordance with the first embodiment of the present invention, the aluminum foil is to be subject to the etching process, and has the composition that is composed of 5 to 40 ppm of Si, 5 to 40 ppm of Fe, 0.1 to 3 ppm of Pb and 15 to 150 ppm of Ni as expressed in terms of the mass ratio, and, for the rest, Al and inevitable impurities, wherein the inevitable impurities include less than 10 ppm of Cu and the total quantity of the inevitable impurities except Cu is equal to or less than 100 ppm and includes 99.9 % or more of Al for the rest, and wherein Ni has the concentration ratio of 5 to 50 in the depth and center of the oxide film and 80 to 150 at the interface between the oxide film and aluminum foil blank, where the 10 nm depth in which Ni that is located toward the foil blank from the interface between the oxide film and aluminum foil blank is assumed to be 1. Thus, the pits can be formed efficiently during the non-electrolytic etching stage, and the good roughening rate can be achieved. This can reduce the manufacturing costs, and can increase the productivity.

In the aluminum foil for the electrolytic capacitor in accordance with the second embodiment of the present invention, the aluminum foil is to be subject to the etching process, and has the composition that is composed of 5 to 40 ppm of Si, 5 to 40 ppm of Fe, 0.1 to 3 ppm of Pb and 15 to 150 ppm of Ni as expressed in terms of the mass ratio, and, for the rest, Al and inevitable impurities, wherein the inevitable impurities include less than 10 ppm of Cu and the total quantity of the inevitable impurities except Cu is equal to or less than 100 ppm and includes 99.9 % or more of Al for the rest, and wherein the oxide film has the thickness of 20 to 60 Å and Ni has the concentration ratio in which the ionic strength ratio is equal to or more than 10 when it is located 0.1 $\mu$m deep, equal to or more than 2 when it is located 0.3 $\mu$m and equal to or more than 1.5 when it is located 0.5 $\mu$m, where it is assumed that the ionic strength of Ni is equal to 1 when Ni is located 1$\mu$m deep in the aluminum foil. Thus, the pits can be formed efficiently during the non-electrolytic etching stage, and the good roughening rate can be achieved. This can reduce the manufacturing costs, and can increase the productivity.

Furthermore, in the etching method for forming pits that is provided in accordance with one embodiment of the present invention, the aluminum foil for the electrolytic capacitor has the composition that is composed of 5 to 40 ppm of Si, 5 to 40 ppm of Fe, 0.1 to 3 ppm of Pb and 15 to 150 ppm of Ni as expressed in terms of the mass ratio, and for the rest, Al and inevitable impurities, the inevitable impurities including less than 10 ppm of Cu and the total quantity of the inevitable impurities except Cu being equal to or less than 100 ppm and including 99.9 % or more of Al, and wherein the etching method includes the step of having the aluminum foil contacted by a solution that contains no hydrochloric acid or solution that contains less than 1000 ppm of chloride ions, the step of removing the surface layer of the aluminum alloy foil surface including the oxide film without conducting electric current, the step of forming the etching pits, and the step of enlarging the diameter of the thus formed etching pit holes. Thus, the etching pits can be formed uniformly and with the high density without relying upon the electrolytic etching process and the manufacturing costs can be reduced.

BRIEF DESCRIPTION OF THE DRAWINGS

Fig. 1 is a flow diagram that shows (a) the manufacturing steps for the aluminum foil according to the present invention and (b) the manufacturing steps for the conventional aluminum foil;
Fig. 2 is a diagram showing the concentration distribution of Ni near the interface between the oxide film and aluminum foil blank in accordance with one embodiment of the present invention; and
Fig. 3 is a graph diagram that represents the location of the depth and the corresponding ionic strength ratio of Ni in the aluminum foil in accordance with one embodiment of the present invention.

BEST MODES OF EMBODYING THE INVENTION

Several embodiments of the aluminum material for the electrolytic capacitor according to the present invention and several corresponding examples thereof are now shown and described below.

(Embodiment 1)

In this embodiment, the high purity aluminum material that has been prepared to contain the components according to the present invention can be obtained by the usual method. It should be understood that the present invention is not restricted to any particular manufacturing method. For example, a slab obtained by the semicontinuous casting may go through the hot rolling process, the result of which may be used as the aluminum material. Otherwise, what may be obtained by the continuous casting may also be used as the high purity aluminum material. This aluminum material should preferably have the purity of 99.95 % or more.

As shown in Fig. 1 (a), the high purity aluminum material thus obtained may be rolled through the hot rolls or continuous casting rolls into the sheet material of about several millimeter thickness, for example. The sheet material may further be rolled through the cold rolls into the final aluminum alloy foil having the thickness of several ten $\mu$ m to 100 $\mu$ m. As an additional process, the sheet material may be degreased appropriately during the cold rolling process or following the cold rolling process. The intermediate annealing process is not required during the cold rolling stage. It should be noted, however, that the present invention allows the intermediate annealing process to be involved if it is required.

The final cold rolling stage may be followed by the final annealing heat treatment stage. It should be noted that the present invention is not restricted to any particular heating conditions during the final annealing process. For example, the final annealing process may occur at 450 to 600°C for 2 to 8 hours under the inert atmosphere such as $N_2$, Ar and the like or under the reductant atmosphere such as $H_2$ and the like or under the mixed atmosphere.

The aluminum foil obtained through each of the processes described above may then be passed through the etching process. The etching process may be carried out by the electrolytic etching using the electrolytic liquid containing the hydrochloric acid as a principal component or by the chemical etching. It should be noted that the present invention is not restricted to any particular etching requirements, but the etching process may occur by following the usual procedure.

During the etching process, the high cubic crystal rate may be achieved by specifying the components as described above. Thus, the pits may be formed with the high density, and the high roughening rate may be achieved. The capacitor with the high capacitance may be obtained by mounting the foil as the electrode within the electrolytic capacitor by following the usual procedure.

(Embodiment 2)

In this embodiment, the high purity aluminum material having the purity of 99.9 % or more and which has been prepared to contain the components according to the present invention is provided. The aluminum material should preferably have the purity of 99.95 % or more.

Similarly to the preceding embodiment, the aluminum material may be obtained by the usual method, and the present invention is not restricted to any particular method. For example, a slab obtained by the semicontinuous casting may go through the hot rolling, the result of which may be used as the aluminum material. Then, the slab may go through the soaking process at 500°C or above for 30 minutes or longer, for example, after which it may go through the hot rolling. The finishing temperature for the hot rolling may be between 250 and 400°C, for example. Otherwise, what may be obtained by the continuous casting may also be used as the high purity aluminum material. The high purity aluminum material may be rolled through the hot rolls or continuous casting rolls into the sheet material of about several millimeter thickness, for example.

The sheet material may further be rolled through the cold rolls into the final aluminum alloy foil having the thickness of several ten $\mu$ m to 100 $\mu$ m. As an additional process, the sheet material may be degreased appropriately during the cold rolling process or following the cold rolling process. The intermediate annealing process may further be involved during the cold rolling process, if required.

The final cold rolling process may be followed by the final annealing heating process. The heating conditions during the final annealing process are important for concentrating Ni on the electrode surface layer. The heating should preferably occur at 500°C or above for three hours or longer. By applying the heating in the reductant atmosphere such as $H_2$ or inert atmosphere such as Ar, $N_2$ under the heating conditions of 500 to 600°C x 3 to 36 hours, for example, the aluminum alloy foil containing the oxide film having the average thickness of 20 to 60 Å may be obtained. In the reductant atmosphere, it is possible to use the mixed gas composed of inert gas or slight oxygen added to the $H_2$ reductant atmosphere. Similarly, in the inert atmosphere, the mixed gas composed of oxygen added to the inert atmosphere may be used. The oxygen that may be added to the reductant atmosphere or inert atmosphere may have the concentration of 10 to 40 ppm, for example.

The aluminum foil resulting from the final annealing process should preferably have the cubic crystal rate of 95 % or more, and may have Ni concentrated on the surface layer. If the annealing process occurs under the vacuum condition, the oxide film may not be deposited properly on the surface, which might disable the good etching to occur during the etching stage.

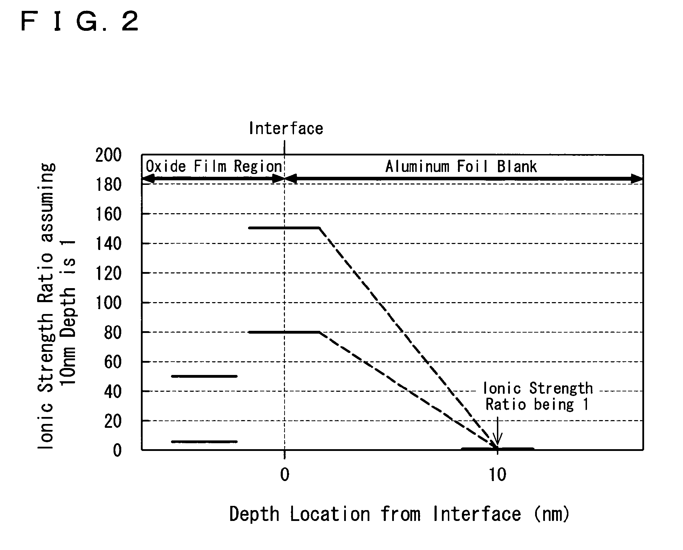

As shown in Fig. 2, the aluminum foil resulting from the final annealing process may have the Ni concentration distribution of 5 to 50 inside the oxide film and 80 to 150 at the interface between the oxide film and aluminum foil blank, where the Ni concentration is assumed to be 1 at the depth of 10 nm toward the blank from the interface between the oxide film and aluminum foil blank. In Fig. 2, the concentration ratio is expressed as the ionic strength ratio. The concentration ratio may also be expressed in terms of the mass percentage (%).

During the final annealing process, however, if the heating temperature is too low or if the temperature holding time is too short, the Ni concentration at the interface cannot be equal to or more than 80 in terms of the relative ratio. If the oxygen concentration in the atmosphere is too high, it cannot be equal to or less than 150. If the heating temperature during the final annealing process is too low, the Ni concentration inside the oxide film cannot be equal to or more than 5 in terms of the relative ratio, and cannot be equal to or less than 50 if the temperature is too high.

The aluminum foil obtained through each of the processes described above may then go through the etching process. This etching process may occur by the non-electrolytic etching method using the solution containing hydrochloric acid as a principal component or the solution containing no hydrochloric acid or the solution containing less than 1000 ppm of chloride ions. It should be noted, however, that the present invention allows for the use of the electrolytic etching method as well. In this case, the good roughening rate can also be achieved.

The etching process may include the surface layer removing stage, the etching pit forming stage and the etching pit hole diameter enlarging stage. In the surface layer removing stage, the surface layer including the oxide film may be removed by dissolving it. The surface layer removing stage is followed by the etching pit forming stage where the etching pits may be formed on the aluminum foil surface, which is then followed by the etching pit hole diameter enlarging stage.

During the etching process, the pits may be formed with the high density and with the high roughening rate, even if this occurs using the non-electrolytic etching method. Then, the foil may go through the forming stage where it may be processed to provide the required withstanding voltage property. Then, the high capacitance capacitor may be obtained by mounting the foil as the electrodes in the electrolytic capacitor by following the usual procedure.

(Embodiment 3)

In this embodiment, the high purity aluminum material having the purity of 99.9 % or more and which has been prepared to contain the components according to the present invention is provided. The aluminum material should preferably have the purity of 99.95 % or more.

Similarly to the preceding embodiments, the aluminum material may be obtained by the usual method, and the present invention is not restricted to any particular method. For example, a slab obtained by the semicontinuous casting may go through the hot rolling process, the result of which may be used as the aluminum material. Otherwise, what may be obtained by the continuous casting may also be used as the high purity aluminum material. The high purity aluminum material may be rolled through the hot rolls or continuous casting rolls into the sheet material of about several millimeter thickness, for example. The sheet material may further be rolled through the cold rolls into the final aluminum alloy foil having the thickness of several ten $\mu$m to 100 $\mu$m. As an additional process, the sheet material may be degreased appropriately during the cold rolling process or following the cold rolling process. The intermediate annealing process may further occur appropriately during the cold rolling process.

The final cold rolling process may be followed by the final annealing heating process. The heating conditions during the final annealing process are important for concentrating Ni on the electrode surface layer. By applying the heating in the reductant atmosphere such as $H_2$ or inert atmosphere such as Ar, $N_2$ under the heating conditions of 500 to 580°C x 3 to 24 hours, for example, the aluminum alloy foil containing the oxide film having the average thickness of 20 to 60 Å may be obtained. In the reductant atmosphere, it is possible to use the mixed gas composed of inert gas or slight oxygen added to the $H_2$ reductant atmosphere. The aluminum foil should preferably have the cubic crystal rate of 95 % or more, and may have Ni concentrated on the surface layer. If the annealing process occurs under the vacuum condition, the oxide film may not be deposited properly on the surface, which might disable the good etching to occur during the etching stage.

Similarly to the preceding embodiments, the aluminum foil obtained through each of the processes described above may further go through the etching process. During the etching process, the pits may be formed with the high density and with the high roughening rate, even if this occurs using the non-electrolytic etching method. Then, the foil may go through the forming stage where it may be processed to provide the required withstanding voltage property. Then, the high capacitance capacitor may be obtained by mounting the foil as the electrodes in the electrolytic capacitor by following the usual procedure.

(Embodiment 4)

In this embodiment, the high purity aluminum material having the purity of 99.9 % or more and which has been prepared to contain the components according to the present invention is provided. The aluminum material may be obtained by the usual method, and the present invention is not restricted to any particular method. For example, a slab obtained by the semicontinuous casting may go through the hot rolling process, the result of which may be used as the aluminum material. Otherwise, what may be obtained by the continuous casting may also be used as the high purity aluminum material. The high purity aluminum material may be rolled through the hot rolls or continuous casting rolls into the sheet material of about several millimeter thickness, for example. The sheet material may further be rolled through the cold rolls into the final aluminum alloy foil having the thickness of several ten $\mu$m to 100 $\mu$m. As an additional process, the sheet material may be degreased appropriately during the cold rolling process or following the cold rolling process. The intermediate annealing process may further occur appropriately during the cold rolling process.

Usually, the final cold annealing process may be followed by the final annealing heating process. The heating condition for the final annealing process may be determined as usual. By applying the heating of 500 to 580°C in the reductant atmosphere, for example, the aluminum alloy foil that contains the oxide film having the average thickness of 20 to 60 Å may be obtained.

The aluminum foil obtained through each of the processes described above may then go through the etching process. The etching process may include the surface layer removing stage, the etching pit forming stage and the etching pit hole diameter enlarging stage.

The surface layer removing stage may occur by dissolving the surface layer including the oxide film in the solution that contains no chloride ions. The quantity of the surface layer that may be removed should preferably correspond to 20 to 200 Å. The surface layer may be removed by using the acid solution that may generally be represented by $H_2SO_4$, $H_3PO_4$, $HNO_3$ or HF, or by using the mixed solution. The similar effect may also be provided by using the alkaline solution.

The surface layer removing stage is followed by the etching pit forming stage where the etching pits may be formed on the aluminum foil surface.

In the etching pit forming stage following the surface layer removing stage, the etching pits may be formed by using the acid solution that is used for the usual etching. For example, this may be accomplished by immersing the aluminum foil in the solution that contains a mixture of 0.1 to 3 mol/1 of hydrochloric acid and 1 to 5 mol/1 of sulfuric acid at 60 to 90°C for 20 to 120 seconds. A slight electric current may be conducted as desired.

The etching pit forming stage is followed by the etching pit hole diameter enlarging stage. The etching pit hole diameter enlarging stage may also occur by using the acid solution that may generally be represented by $H_2SO_4$, $H_3PO_4$, $HNO_3$ or HF, or by using the mixed solution, or by using the alkaline solution, similarly to the surface layer removing stage. During the etching pit hole diameter enlarging stage, the solution that contains no hydrochloric acid or solution that contains less than 1000 ppm of chloride ions preferably may also be used, and the same solutions that are used during the surface layer removing stage may also be used.

The ideal etching process may consist of the stage of immersing the aluminum foil in the solution that contains 1 to4 mol/1 of sulfuric acid at 20 to 70°C for 30 to 500 seconds and then removing the surface oxide film, the stage of immersing the aluminum foil in the solution that contains a mixture of 0.1 to 3 mol/1 of hydrochloric acid and 1 to 4 mol/ 1 of sulfuric acid at 60 to 90°C for 20 to 120 seconds and then forming the etching pits, and the stage of immersing the aluminum foil in the solution that contains 1 to 4 mol/1 of sulfuric acid at 60 to 90°C for 400 to 1000 seconds and then enlarging the pit diameters.

During the etching process, the pits may be formed on the aluminum foil with the high density and with the high roughening rate, by setting the components and usable solutions as described above. Then, the aluminum foil may go through the forming process where the required withstanding voltage property may be provided. Then, the high capacitance capacitor may be obtained by mounting this aluminum foil as the electrolytic capacitor electrode by following the usual procedure.

It may be appreciated that each of the embodiments described so far may suitably be applied to the aluminum foil for the electrolytic capacitor that is used as anode of the medium/high voltage electrolytic capacitor, or the pit forming etching process that may occur for such aluminum material or aluminum foil. In other words, the present invention is particularly suitable for use in those applications in which it is used as the anode of the medium/high voltage electrolytic capacitor. It should be noted, however, that the present invention is not restricted to such applications, but may also be used for the lower forming voltage capacitors and may be applied to materials for the electrolytic capacitor cathodes.

(Example 1)

An ingot that contains the components (for the rest, Al) shown in Table 1 is provided, and the soaking process occurs for the ingot at 500°C or above for 30 minutes or longer, for which the hot rolling process occurs with the working rate of 95 to 99 %. During the hot rolling process, the finishing temperature may be 250 to 400°C. The hot rolling process is followed by the cold rolling process that occurs with the finishing rate of 95 % or more, resulting in samples having the foil thickness of 120 $\mu$m. Those samples will be referred to as the "inventive samples". To check for the effect of the rolling working rate, the rolling occurs with the working rates shown in Table 2. The soaking process and hot rolling finishing temperatures are the same as those shown in Table 1.

To compare with the inventive samples, the intermediate annealing process occurs at 200 to 260°C for 2 to 6 hours against the cold rolled material having the foil thickness of 150 $\mu$m, and is followed by the additional rolling process, resulting in samples having the foil thickness of 120 $\mu$m. Those will be referred to as the "non-inventive samples".

(Table 1)

| No. | Composition(ppm) | | | | | | Intermediate Annealing | Cubic Crystal Rate | Inventive Sample or Non-inventive Sample | Remarks Column |
|---|---|---|---|---|---|---|---|---|---|---|
| | Fe | Si | Cu | Ni | Pb | Inevitable Impurities | | | | |
| 1 | 10 | 10 | 6 | 2 | 0.5 | <100 | No | 90.3% | Non-inventive Sample | |
| 2 | 10 | 10 | 6 | 15 | 0.5 | <100 | No | 98.5% | Inventive Sample | |
| 3 | 10 | 10 | 9 | 50 | 0.5 | <100 | No | 99.3% | Inventive Sample | |
| 4 | 10 | 10 | 8 | 100 | 0.5 | <100 | No | 99.2% | Inventive Sample | |
| 5 | 10 | 10 | 9 | 150 | 0.5 | <100 | No | 97% | Inventive Sample | |
| 6 | 10 | 10 | 9 | 200 | 0.5 | <100 | No | 93% | Non-inventive Sample | |
| 7 | 10 | 10 | 9 | 50 | 0.5 | <100 | Yes | 99.2% | Inventive Sample | |
| 8 | 10 | 10 | 25 | 2 | 0.5 | <100 | No | 80.5% | Non-inventive Sample | Cu removal required |
| 9 | 10 | 10 | 50 | 50 | 0.5 | <100 | No | 85.6% | Non-inventive Sample | Cu removal required |

(Table 2)

| No. | Composition(ppm) | | | | | | Hot Rolling Working Rate | Cold Rolling Working Rate | Intermediate Annealing | Cubic Crystal Rate | Inventive Sample or Non-inventive Sample |
|---|---|---|---|---|---|---|---|---|---|---|---|
| | Fe | Si | Cu | Ni | Pb | Inevitable Impurities | | | | | |
| 1 | 10 | 10 | 6 | 50 | 0.5 | <100 | 80% | 70% | No | 98.7% | Inventive Sample |
| 2 | 10 | 10 | 6 | 50 | 0.5 | <100 | 80% | 95% | No | 99.2% | |
| 3 | 10 | 10 | 6 | 50 | 0.5 | <100 | 98% | 70% | No | 99.5% | |
| 4 | 10 | 10 | 6 | 50 | 0.5 | <100 | 98% | 95% | No | 99.3% | |

For those aluminum foils represented by the inventive and non-inventive samples, the final annealing process occurs at 500 to 570°C for 3 to 24 hours in the Ar, $N_2$ and $H_2$ inert atmospheres. Following the final annealing process, the aluminum foils are immersed in the solution that contains a mixture of 35 % HC1, 60 % $HNO_3$ and 48 % HF at the proportion of 33 : 33 : 1 by the volume ratio at 30°C for 30 seconds, and then are washed by water and dried. The results are the inventive and non-inventive samples, respectively, which contain the cubic crystal grains and other oriented crystal grains having the varying luster. Those samples are entered into the image analytical apparatus so that the cubic orientation occupancy rate may be estimated. The results are shown in Tables 1 and 2.

For the aluminum foils represented by the inventive samples described above in the Examples and which contain less than 10 ppm of Cu and Ni added in the range of 15 and 150 ppm, the cubic crystal rate of 95 % or more can be achieved without the intermediate annealing process and additional rolling process being involved. The cubic crystal rate is equivalent to that for the conventional aluminum foil obtained through the intermediate annealing process and additional rolling process. For the aluminum foils that contain more than 10 ppm of Cu and too small quantity of Ni (No. 8), an adequate quantity of Ni (No. 9) and too large quantity of Ni (No. 6) in addition, the high cubic crystal rate cannot be achieved without the intermediate annealing process being involved. For those foils, the etching process must be followed by the Cu removing process. Even if an adequate quantity of Cu is contained, the high crystal rate cannot be achieved for the samples that contain too small quantity of Ni (No. 1) and too large quantity of Ni (No. 6) in addition.

For the inventive samples, as shown in Table 2, the high crystal rate can be achieved without the intermediate annealing process being involved and without being affected by the rolling working rate.

(Example 2)

An ingot that contains the components shown in Table 3 (for the rest, 99.9 % or more of Al) is provided, for which the soaking process occurs at 500°C or more for 30 minutes or longer. The soaking process is followed by the hot rolling process that occurs with the working rate of 95 to 99 %. During the hot rolling process, the finishing temperature is set to 250 to 400°C. Following the hot rolling process, the cold rolling process occurs at 95 % or more, resulting in samples having the foil thickness of 110 $\mu$m. During the cold rolling process, the intermediate annealing process may be involved as required.

For the foils represented by those samples, the annealing process occurs in the Ar, $N_2$ and $H_2$ atmospheres shown in Table 3, resulting in foils having the cubic crystal rate of more than 95 %. During the annealing process, samples having the different concentration slopes may be obtained by varying the temperature and time duration. The oxide film thickness may be measured by ESCA (X-ray photoelectron spectroscopy). The results are presented in Table 3. The element distribution in the neighborhood of the interface between the oxide film and aluminum foil may be observed for the thin film in cross section prepared by the ion thinning method, by using the transmission electron microscope (Model JEM-2010F made by Nippon Denshi) and by applying the accelerating voltage of 200 kV, and the element analysis may occur by the accompanying EDX. During the element analysis, the analytical spot diameter is set to 3 nm. The concentration ratios are shown in Table 3, in which the Ni ionic strength ratio in the center and depth direction of the oxide film and Ni ionic strength ratio are expressed in terms of the relative values, where it is assumed that the Ni ionic strength ratio at the depth of 10 nm toward the foil blank from the interface is 1.

Those aluminum foils are immersed in the solution that contains 3 mol/l of sulfuric acid at 40°C, in order to remove the oxide films. Following the film removal, the foils are washed by water and are then immersed in the mixed solution that contain 1 mol/l of hydrochloric acid and 3 mol/1 of sulfuric acid at 70°C for 60 seconds, thereby forming the etching pits. After the pits are formed, the foils are washed by water and the foils are then immersed in the solution that contains 3 mol/l of sulfuric acid at 75°C for 600 seconds. Then, the pit diameter is enlarged, and then the foils are washed by the ion exchange water and dried.

For the aluminum foils that have the etching pits thus formed, the forming is then carried out by immersing them in the solution that contains 10 % of boric acid by weight, by applying 300 V, and the capacitance is then estimated. The results are presented as the relative values, based on 100 % for the samples obtained in Example 1.

For the foils that contain Ni such as the inventive samples 1 to 13, it may be seen that the etching pits may be formed by the chemical dissolution and the high capacitance may thus be achieved.

For the foils that contain no Ni such as the non-inventive sample 1, the etching pits cannot be formed, and the capacitances thus achieved are thus extremely low. For the foils having the oxide film and interface not concentrated adequately, the capacitances are generally low.

(Table 3)

EP 1 734 546 A2

16

| Samples No. | | Aluminum Foil Comp. (ppm) | | | | | | Final Annealing | | | | Oxide Film Thick (nm) | Ionic Strength Rate | | | Capacitance (%) |
|---|---|---|---|---|---|---|---|---|---|---|---|---|---|---|---|---|
| | | Fe | Si | Cu | Pb | Ni | Inevitable Impurities | Temp. | Time | Atmosphere | Oxygen Density (ppm) | | Oxide Film | Interface | 10nm Depth | |
| Inventive Sample | 1 | 11 | 12 | 7 | 0.5 | 15 | 6 | 560 | 6 | Ar | 20 | 5 | 25 | 100 | 1 | 100 |
| | 2 | 13 | 15 | 7 | 0.5 | 100 | 6 | 550 | 12 | H2 | 30 | 5 | 30 | 100 | 1 | 101 |
| | 3 | 13 | 14 | 8 | 0.5 | 150 | 6 | 560 | 6 | Ar | 20 | 5 | 26 | 98 | 1 | 98 |
| | 4 | 12 | 13 | 6 | 0.5 | 100 | 110 | 560 | 6 | Ar | 20 | 5 | 29 | 100 | 1 | 97 |
| | 5 | 12 | 13 | 6 | 0.5 | 100 | 8 | 530 | 4 | Ar | 20 | 4 | 6 | 80 | 1 | 98 |
| | 6 | 13 | 14 | 7 | 0.5 | 120 | 10 | 570 | 10 | Ar | 20 | 6 | 48 | 95 | 1 | 97 |
| | 7 | 12 | 12 | 6 | 0.5 | 120 | 7 | 550 | 25 | Ar | 10 | 4 | 30 | 148 | 1 | 98 |
| | 8 | 14 | 15 | 6 | 0.5 | 150 | 7 | 450 | 1 | Ar | 40 | 4 | 1 | 20 | 1 | 80 |
| | 9 | 13 | 13 | 5 | 0.5 | 120 | 8 | 500 | 6 | Ar | 5 | 3 | 5 | 30 | 1 | 50 |
| | 10 | 11 | 14 | 5 | 0.4 | 150 | 9 | 400 | 1 | Ar | 30 | 3 | 0 | 2 | 1 | 30 |
| | 11 | 12 | 13 | 8 | 0.6 | 120 | 7 | 550 | 6 | Vacuum | | 1 | 0 | 70 | 1 | 73 |
| | 12 | 12 | 13 | 7 | 0.5 | 130 | 5 | 550 | 6 | Ar | 5 | 4 | 3 | 100 | 1 | 85 |
| | 13 | 13 | 12 | 8 | 0.5 | 140 | 9 | 560 | 4 | Ar | 60 | 8 | 25 | 160 | 1 | 83 |
| Non-inventive Sample | 1 | 12 | 14 | 7 | 0.5 | Not Added | 8 | 560 | 6 | Ar | 30 | 6 | — | — | — | 5 |
| | 2 | 12 | 12 | 8 | 0.6 | 300 | 7 | 550 | 6 | Ar | 80 | 10 | 20 | 50 | 1 | 27 |

(Example 3)

An ingot that contains the components shown in Table 4 (for the rest, 99.9 % or more of Al and less than 100 ppm of impurities except Cu) is provided, for which the soaking process occurs at 500°C or above for 30 minutes or longer. The soaking process is followed by the hot rolling process that occurs with the working rate of 95 to 99 %. During the hot rolling process, the finishing temperature is set to 250 to 400°C. Following the hot rolling process, the cold rolling process occurs at 95 % or more, resulting in samples having the foil thickness of 110 $\mu$m. During the cold rolling process, the intermediate annealing process may be involved as required.

For the foils represented by those samples, the annealing process occurs in the Ar, $N_2$ and $H_2$ atmospheres at the temperatures and time durations shown in Table 4, resulting in foils having the cubic crystal rate of 95 % or more. During the annealing process, samples having the different concentration slopes may be obtained by varying the temperature and time duration. The oxide film thickness may be measured by ESCA (X-ray photoelectron spectroscopy).

The concentration slopes for the elements may be determined by detecting the ionic strength at each depth location by using SIMS (secondary ion mass spectroscopy).

For those aluminum foils thus obtained, the oxide film removing process occurs by immersing them in the solution that contains 3 mol/l of sulfuric acid at 40°C. Following the oxide film removing process, the foils are washed by water, on which the etching pits may be formed by immersing them in the mixed solution that contains 1 mol/1 of hydrochloric acid and 3 mol/1 of sulfuric acid at 70°C for 60 seconds. After the pits are formed, the foils are washed by water, and are then immersed in the solution that contains 3 mol/1 of sulfuric acid at 75°C for 600 seconds. Then, the foils have the pit hole diameters enlarged, after which the foils are washed by the ion exchange water and dried.

For the aluminum foils having the etching pits thus formed, the forming is then carried out by immersing them in the solution that contains 10 % of boric acid by weight and by applying 300 V, and the capacitance is then estimated. The results are presented as the relative values, based on 100 % for the samples obtained in Example 1.

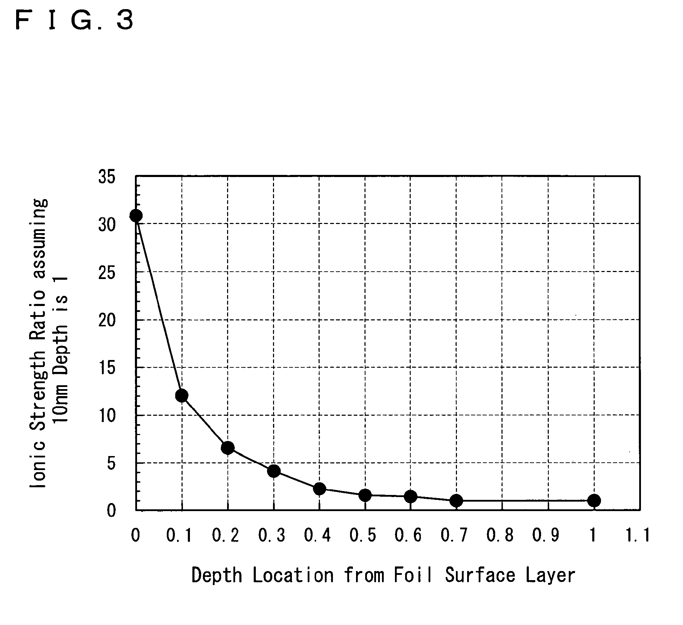

For the foils that contain Ni such as the inventive samples 1 to 14, it may be seen that the etching pits may be formed by the chemical dissolution and the high capacitance may thus be achieved. Variations of the ionic strength ratio in the direction of the depth for the sample 1 are shown in Fig. 3. It may be seen from Fig. 3 that if the ionic strength ratio of Ni at the depth location of 1$\mu$m is assumed as 1, Ni has the ionic strength ratio of equal to or more than 10 at the depth location of 0.1$\mu$m from the surface, equal to or more than 2 at the depth location of 0.3 $\mu$m, and equal to or more than 1.5 at the depth location of 0.5$\mu$m, which indicates that Ni has the good concentration at the surface layer.

For the foils that contain no Ni such as the non-inventive sample 1, the etching pits cannot be formed, and the capacitances thus achieved are thus extremely low. For the foils for which the concentration slope does not continue to the depth of 0.5 $\mu$m, the etching pits may be formed but the number of the formed pits is insufficient. Generally, the capacitance exhibits the low value.

(Table 4)

| Samples No. | | Aluminum Foil Comp. (ppm) | | | | | | Final Annealing | | Atmosphere | Oxide Film Thick (Å) | Ionic Strengh Ratio assuming 1 μm Depth is 1 | | | Capacitance (%) |
|---|---|---|---|---|---|---|---|---|---|---|---|---|---|---|---|
| | | Fe | Si | Cu | Pb | Ni | Inevitable Impurities | Temp.(℃) | Time(h) | | | 0.1 μm | 0.3 μm | 0.5 μm | |
| Inventive Sample | 1 | 12 | 11 | 8 | 0.4 | 150 | 15 | 520 | 6 | Ar | 40 | 12 | 3 | 2 | 100 |
| | 2 | 12 | 13 | 7 | 0.5 | 100 | 20 | 540 | 5 | Ar | 42 | 15 | 5 | 2 | 110 |
| | 3 | 13 | 12 | 8 | 0.5 | 120 | 20 | 580 | 8 | H2 | 45 | 30 | 2 | 1.6 | 115 |
| | 4 | 12 | 15 | 8 | 0.4 | 110 | 10 | 580 | 20 | H2 | 46 | 40 | 10 | 5 | 103 |
| | 5 | 11 | 13 | 7 | 0.4 | 50 | 15 | 550 | 4 | H2 | 42 | 11 | 5 | 2 | 102 |
| | 6 | 12 | 14 | 6 | 0.5 | 60 | 30 | 580 | 5 | H2 | 50 | 22 | 7 | 3 | 101 |
| | 7 | 12 | 12 | 8 | 0.4 | 80 | 15 | 550 | 9 | Ar | 45 | 12 | 4 | 2 | 102 |
| | 8 | 13 | 13 | 8 | 0.5 | 45 | 20 | 550 | 9 | Ar | 43 | 14 | 8 | 3 | 103 |
| | 9 | 14 | 15 | 7 | 0.5 | 60 | 10 | 550 | 9 | Ar | 49 | 13 | 5 | 2 | 101 |
| | 10 | 11 | 10 | 8 | 0.5 | 150 | 15 | 590 | 20 | H2 | 47 | 20 | 1 | 1 | 80 |
| | 11 | 12 | 12 | 8 | 0.4 | 150 | 12 | 500 | 1 | N2 | 29 | 5 | 2 | 1.6 | 50 |
| | 12 | 12 | 13 | 7 | 0.4 | 150 | 13 | 530 | 1 | H2 | 35 | 12 | 5 | 1 | 98 |
| | 13 | 11 | 10 | 7 | 0.4 | 150 | 14 | 500 | 1 | Ar | 31 | 8 | 1 | 1 | 30 |
| | 14 | 12 | 11 | 7 | 0.4 | 150 | 13 | 570 | 24 | Vacuum | 13 | 12 | 3 | 2 | 83 |
| Non-inventive Sample | 1 | 12 | 11 | 7 | 0.5 | Not Added | 10 | 560 | 8 | H2 | 39 | — | — | — | 5 |

(Example 4)

The aluminum slab is provided, which contains Al having the purity of 99.9 % or more, 15 to 150 ppm of Ni as shown in Table 5 and for the rest, inevitable impurities (8 ppm of Cu and less than 100 ppm of others except Cu). Then, the homogenizing process and soaking process occur for this aluminum slab according to the usual procedure, and are followed by the hot rolling process and cold rolling process during which an aluminum foil of 110 μm thickness may be obtained. The foil is then heated at 520°C for 6 hours in the argon atmosphere, resulting in a soft foil of 110 μm that has the cubic crystal rate of 95 % or more and self reacting capability. This soft foil has an oxide film having the average thickness of 45 Å deposited on the surface thereof.

Then, the surface layer including the oxide film is removed from the aluminum foil by immersing it in the solution that contains 3 mol/1 of sulfuric acid at 40°C. While the surface layer is being removed, the quantity of the surface layer that may be removed may be varied by changing the amount of the immersing time, as shown in Table 5. It should be noted, however, that this quantity (thickness) of the surface layer being removed may be determined by the equation (1) mentioned earlier, using the sulfuric acid as the reagent. After the surface layer is removed, the aluminum foil is washed by water, and the etching pits are formed by immersing it in the solution that contains 1 mol/1 of hydrochloric acid + 3 mol/1 of sulfuric acid, at 70°C for 60 seconds. During this stage, for some of the aluminum foils thus obtained, a direct current having the current density of 10 to 200 mA/cm$^2$ (for one side) is conducted for 60 seconds. Following the pit forming stage, the aluminum foils are washed by water, and the pit hole diameters are then enlarged by immersing the aluminum foils in the solution that contains 3 mol/l of sulfuric acid at 75°C for 600 seconds. After the pit diameters are enlarged, the aluminum foils are washed by the ion exchange water and dried.

For the aluminum foils having the etching pits thus formed, the forming is then carried out in the solution that contains 10 % of boric acid by weight, by applying 300 V, and the capacitance is estimated.

It may be seen from Table 5 that, for the aluminum foils that contain the quantity of Ni added as specified by the present invention, the adequate capacitance may be obtained although they are dissolved by the non-electrolysis without conducting electrical current during the pit forming process, and the etching pits can be grown properly. It is also found that the high capacitance may be achieved by removing the surface layer including the oxide film by the amount of 20 to 200 Å. For those foils, no difference is noticed in the property even if they are processed through the electrolytic etching, and the surface oxide film has the great effect on the foils.

For the foils that contain the quantity of Ni added as specified by present invention but has the surface layer removed by too little or too much as shown by the non-inventive samples, it is noticed that the capacitance is low. For the foils that do not contain an adequate quantity of Ni, it is also noticed that the high capacitance cannot be achieved.

(Table 5)

| Samples No. | | Slight Element | Surface Layer Removed (Å) | Current Density in Pit Forming Stage (mA/cm$^2$) | Capacitance ($\mu$F/cm$^2$) |
|---|---|---|---|---|---|
| Inventive | 1 | Ni 130ppm | 40 | - | 1.35 |
| | 2 | Ni 130ppm | 50 | - | 1.33 |
| | 3 | Ni 130ppm | 200 | - | 1.36 |
| | 4 | Ni 130ppm | 70 | 50 | 1.32 |
| | 5 | Ni 130ppm | 60 | 200 | 1.34 |
| | 6 | Ni 130ppm | 70 | 400 | 1.31 |
| | 7 | Ni 130ppm | 15 | - | 1.25 |
| | 8 | Ni 130ppm | 300 | - | 0.75 |
| Non-Inventive | 1 | Not Added | 70 | - | 0.1 |
| | 2 | Ni 130ppm | 0 | - | 0.5 |
| | 3 | Ni 10ppm | 80 | - | 0.21 |

(Example 5)

The aluminum foil represented by the inventive sample 1 that contains 130 ppm of Ni added is used, and the 40Å surface layer including the oxide film by the mass ratio is removed by immersing it in the solution that contains 3 mol/1 of sulfuric acid and 1 mol/1 hydrochloric acid at 40°C. After the removal, the foil is washed by water, and the etching pits are then formed by immersing it in the solution that contains 1 mol/1 hydrochloric acid and 3 mol/1 of sulfuric acid at 70°C for 60 seconds. After the pits are formed, the foil is then washed by water, and the pit diameters are enlarged by immersing it in the solution that contains 2 mol/l of hydrochloric acid at 85°C for 600 seconds. Then, the foil is washed by the ion exchange water and dried.

For the aluminum foils having the etching pits thus formed, the forming is then carried out in the solution that contains 10 % of boric acid by weight, by applying 300 V, and the capacitance is estimated. Then, the bending strength is measured for each of the non-inventive samples, and the relative estimation occurs, based on the bending strength for the inventive sample. The measuring test occurs by complying with JIS P 8115:2001 Paper and Cardboards & #8722; Anti-bending strength testing procedure & #8722; MIT testing machine rule, under the conditions of a load of $\phi$ 1.0 mm, 250 g and the bending angle of 90 degrees. The test occurs by reciprocating the load one time, and the results are estimated once. The results are presented in Table 6.

By comparing those foils for which the surface layer removing and pit hole diameter enlarging have occurred by immersing them in the solution that contains no hydrochloric acid with those foils for which the surface layer removing has occurred by immersing them in the solution that contains the hydrochloric acid, it is noticed that the capacitance and bending strength are reduced for the latter foils. For the foils for which the pit hole diameter enlarging has occurred by immersing them in the solution that contains the hydrochloric acid, it is noticed that the bending strength is reduced remarkably. This is because the pit formation will be promoted if the hydrochloric acid is contained, as a result of which the pits may be formed during the surface layer removing stage and may be grown during the hole diameter enlarging stage. It may be appreciated from the preceding description that when the etching occurs for those foils that have the pits grown non-electrolytically, the high capacitance foils can be obtained by choosing the solution that contains no hydrochloric acid or the solution that contains less than 1000 ppm of chloride ions during the surface layer removing stage. Furthermore, the high strength foils can be obtained by choosing the solution that contains no hydrochloric acid or the solution that contains less than 1000 ppm of chloride ions during the hole diameter enlarging stage.

(Table 6)

| Samples No. | | Surface Layer Removed | Hole Diameter Enlarge | Capacitance ($\mu$F/cm$^2$) | Bending Strength |
|---|---|---|---|---|---|
| Inventive 1 | | 3mol Sulfuric Acid | 3mol Sulfuric Acid | 1.36 | 100 |
| Non-Inventive | 1 | 3mol Sulfuric Acid + 1mol Hydrochloric Acid | 3mol Sulfuric Acid | 1.29 | 95 |
| | 2 | 3mol Sulfuric Acid + 1mol Hydrochloric Acid | 3mol Sulfuric Acid + 1mol Hydrochloric Acid | 1.28 | 75 |

## Claims

1. An aluminum foil for the electrolytic capacitor comprising 5 to 40 ppm of Si, 5 to 40 ppm of Fe, 0.1 to 3 ppm of Pb and 15 to 150 ppm of Ni as expressed in terms of the mass ratio, and for the rest, Al and inevitable impurities, said inevitable impurities including less than 10 ppm of Cu and the total quantity of said inevitable impurities other than Cu being equal to or less than 100 ppm.

2. An aluminum foil for the electrolytic capacitor, said aluminum foil being subject to the etching process and having the composition that is composed of 5 to 40 ppm of Si, 5 to 40 ppm of Fe, 0.1 to 3 ppm of Pb and 15 to 150 ppm of Ni as expressed in terms of the mass ratio, and for the rest, Al and inevitable impurities, said inevitable impurities including less than 10 ppm of Cu and the total quantity of said inevitable impurities other than Cu being equal to or less than 100 ppm and containing 99.9 % or more of Al for the rest, wherein said Ni has the concentration ratio of 5 to 50 when it is located in the center of the oxide film and in the depth direction thereof and 80 to 150 when it is located near the interface between the oxide film and aluminum foil blank, where the 10 nm depth in which Ni is located toward the aluminum foil blank from the interface between the oxide film and aluminum foil blank is assumed to be one (1).

3. An aluminum foil for the electrolytic capacitor, said aluminum foil being subject to the etching process and having the composition that is composed of 5 to 40 ppm of Si, 5 to 40 ppm of Fe, 0.1 to 3 ppm of Pb and 15 to 150 ppm of Ni as expressed in terms of the mass ratio, and for the rest, Al and inevitable impurities, said inevitable impurities including less than 10 ppm of Cu and the total quantity of said inevitable impurities other than Cu being equal to or less than 100 ppm and containing 99.9 % or more of Al for the rest, wherein the oxide film has the thickness of 20 to 60 Å and Ni has the concentration slope in which its ionic strength ratio is equal to or more than 10 when it is located 0.1 $\mu$ m deep, equal to or more than 2 when it is located 0.3 $\mu$m deep and equal to or more than 1.5 when it is located 0.5 $\mu$m deep, where it is assumed that the ionic strength ratio of Ni is equal to 1 when the aluminum foil is located 1$\mu$m deep.

4. An etching method for forming etching pits, wherein the aluminum foil for the electrolytic capacitor being subject to the etching process has the composition that is composed of 5 to 40 ppm of Si, 5 to 40 ppm of Fe, 0.1 to 3 ppm of Pb and 15 to 150 ppm of Ni as expressed in terms of the mass ratio, and for the rest, Al and inevitable impurities, said inevitable impurities including less than 10 ppm of Cu and the total quantity of said inevitable impurities other than Cu being equal to or less than 100 ppm and including 99.9 % or more of Al for the rest and wherein the etching method includes the step of having the aluminum foil contacted by a solution that contains no hydrochloric acid or solution that contains less than 1000 ppm of chloride ions, the step of removing the surface layer of the aluminum alloy foil surface including the oxide film without conducting electric current, the step of forming the etching pits, and the step of enlarging the diameter of the thus formed etching pit holes.

5. An etching method for forming etching pits, wherein the aluminum foil for the electrolytic capacitor being subject to the etching process has the composition that is composed of 5 to 40 ppm of Si, 5 to 40 ppm of Fe, 0.1 to 3 ppm of Pb and 15 to 150 ppm of Ni as expressed in terms of the mass ratio, and for the rest, Al and inevitable impurities, said inevitable impurities including less than 10 ppm of Cu and the total quantity of said inevitable impurities other than Cu being equal to or less than 100 ppm and including 99.9 % or more of Al for the rest and said Ni has the concentration ratio of 5 to 50 when it is located in the center of the oxide film and in the depth direction thereof and 80 to 150 when it is located near the interface between the oxide film and aluminum foil blank, where the 10 nm depth in which Ni is located toward the aluminum foil blank from the interface between the oxide film and aluminum foil blank is assumed to be one (1), and wherein the etching method includes the step of having the aluminum foil contacted by a solution that contains no hydrochloric acid or solution that contains less than 1000 ppm of chloride ions, the step of removing the surface layer of the aluminum alloy foil surface including the oxide film without conducting electric current, the step of forming the etching pits, and the step of enlarging the diameter of the thus formed etching pit holes.

6. An etching method for forming etching pits, wherein the aluminum foil for the electrolytic capacitor being subject to the etching process has the composition that is composed of 5 to 40 ppm of Si, 5 to 40 ppm of Fe, 0.1 to 3 ppm of Pb and 15 to 150 ppm of Ni as expressed in terms of the mass ratio, and for the rest, Al and inevitable impurities, said inevitable impurities including less than 10 ppm of Cu and the total quantity of said inevitable impurities other than Cu being equal to or less than 100 ppm and including 99.9 % or more of Al for the rest, wherein the oxide film has the thickness of 20 to 60 Å and Ni has the concentration slope in which its ionic strength ratio is equal to or more than 10 when it is located 0.1$\mu$m deep, equal to or more than 2 when it is located 0.3$\mu$m deep and equal to or more than 1.5 when it is located 0.5μm deep, where it is assumed that the ionic strength ratio of Ni is equal to 1 when the aluminum foil is located 1 μm deep, and wherein the etching method includes the step of having the aluminum foil contacted by a solution that contains no hydrochloric acid or solution that contains less than 1000 ppm of chloride ion, the step of removing the surface layer of the aluminum alloy foil surface including the oxide film without conducting electric current, the step of forming the etching pits, and the step of enlarging the diameter of the thus formed etching pit holes.

7. The etching method for forming etching pits as defined in any one of Claims 4 through 6, wherein the surface layer is removed by the thickness of 20 to 200 Å.

8. The etching method for forming etching pits as defined in any one of Claims 4 through 6, wherein the step of enlarging the diameter of the thus formed etching pit holes is carried out by having the aluminum alloy foil contacted by a solution that contains no hydrochloric acid or solution that contains less than 1000 ppm of chloride ions.

9. The etching method for forming etching pits as defined in Claim 8, wherein the step of removing the surface layer and the step of enlarging the diameter of the thus formed etching pit holes are both carried out by using a solution that contains no hydrochloric acid or solution that contains less than 1000 ppm of chloride ions.

10. The etching method for forming etching pits as defined in any one of Claims 4 through 6 and 9, wherein the step of forming etching pits is carried out by having the aluminum alloy foil contacted by the solution that contains chloride ions.

11. The etching method for forming etching pits as defined in Claim 8, wherein the step of forming etching pits is carried out by having the aluminum alloy foil contacted by the solution that contains chloride ions.

# F I G. 1

(a)

Inventive Material → Hot Rolling → Cold Rolling → Final Annealing

(b)

Non-Inventive Material → Hot Rolling → Cold Rolling → Intermediate Annealing → Additional Rolling → Final Annealing

Once or more

# F I G. 2

Interface

Oxide Film Region | Aluminum Foil Blank

Ionic Strength Ratio assuming 10nm Depth is 1

Ionic Strength Ratio being 1

Depth Location from Interface (nm)

F I G. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S54197911242 B
- JP S631988255911 B

- JP H41992213810 B
- JP 2003318069 A